Europäisches Patentamt

European Patent Office

Office européen des brevets

(11) Veröffentlichungsnummer: **0 224 211 B1**

# EUROPÄISCHE PATENTSCHRIFT

(45) Veröffentlichungstag der Patentschrift: 25.09.91

(21) Anmeldenummer: 86116156.0

(22) Anmeldetag: 21.11.86

(51) Int. Cl.⁵: **G11B 5/53, G11B 5/55,**
**//G11B5/588,G11B15/18**

(54) **Kopfradanordnung für einen Recorder.**

(30) Priorität: 28.11.85 DE 3542064

(43) Veröffentlichungstag der Anmeldung:
03.06.87 Patentblatt 87/23

(45) Bekanntmachung des Hinweises auf die
Patenterteilung:
25.09.91 Patentblatt 91/39

(84) Benannte Vertragsstaaten:
**AT BE CH DE ES FR GB GR IT LI LU NL SE**

(56) Entgegenhaltungen:
**EP-A- 0 197 333**
**DE-A- 1 149 048**
**DE-A- 2 737 952**
**US-A- 3 068 455**
**US-A- 4 047 231**

**PATENT ABSTRACTS OF JAPAN vol. 6, no.**
**129 (P-128)(1007) 15 Juli 1982, & JP-A-57**
**55506**

(73) Patentinhaber: **Deutsche Thomson-Brandt**
**GmbH**
**Hermann-Schwer-Strasse 3 Postfach 1307**
**W-7730 Villingen-Schwenningen(DE)**

(72) Erfinder: **Uhde, Dietmar, Dipl.-Ing.**
**Weiherstrasse 11**
**W-7744 Königsfeld/Schwarzwald(DE)**

(74) Vertreter: **Einsel, Robert, Dipl.-Ing.**
**Deutsche Thomson-Brandt GmbH Patent-**
**und Lizenzabteilung Göttinger Chaussee 76**
**W-3000 Hannover 91(DE)**

**Beschreibung**

Es sind Recorder, z.B. Videorecorder, bekannt, bei denen ein Rotierendes Kopfrad ganz oder teilweise von einem Magnetband umschlungen ist. Das Kopfrad trägt ein oder mehrere Köpfe, die auf dem Magnetband Spuren schräg, quer oder parallel zur Bandkante schreiben.

Bei bestimmten Recordern muß für den vorgeschriebenen Schreibvorgang aufeinanderfolgender Spuren oder sonstige Sonderbetriebsarten die Kopftrommel zusätzlich eine sogenannte Hubbewegung in Richtung der Rotationsachse ausführen. Eine derartige Hubbewegung wird z.B. benötigt bei einer sogenannten Matrix-Aufzeichnung mit parallel zur Bandkante verlaufenden Spuren gemäß EP-A-0197333, Stand der Technik gemäß Art. 54(3) EPÜ. Die Hubbewegung kann auch dazu dienen, das Kopfrad in einen anderen Bereich des Magnetbandes zu verschieben. Das ist z.B. sinnvoll, wenn gemäß der DE-A-33 07 324 auf dem Magnetband zwei oder mehrere Spurbahnen mit unterschiedlichen Signalen aufgezeichnet sind. Die Hubbewegung ist ebenfalls erforderlich bei einem Recorder mit Schrägspuraufzeichnung, bei dem gemäß der DE-A-3517317 zur Einschaltung von Sonderläufen das Kopfrad in Richtung seiner Achse verschoben werden muß.

Es wurde bereits vorgeschlagen, eine derartige Hubbewegung mit einer auf das Kopfrad axial einwirkenden Kurvenscheibe, mit einer Tauchkernspule, einem sogenannten Aktuator, oder mit einem Schrittmotor zu bewirken. Die EP-A-0197333, deren Inhalt als nächstliegender Stand der Technik angesehen wird, zeigt ein von einem Motor angetriebenes Schneckengetriebe.

Die bisher bekannten oder vorgeschlagenen Lösungen für eine derartige Hubbewegung haben verschiedene Nachteile. Diese betreffen u.a. die Genauigkeit, das bei Umkehr der Hubbewegung auftretende Umkehrspiel, die relativ große zu reversierende Masse, die Abhängigkeit von der Schwerkraft, d.h. eine von der Lage des Gesamtgerätes abhängige Funktion, mechanische Ungenauigkeit und dgl.

Der Erfindung liegt die Aufgabe zugrunde, eine Lösung für die genannte Hubbewegung des Kopfrades zu schaffen, die mit großer Genauigkeit, geringen Reibungsverlusten und geringen zu reversierenden Massen arbeitet.

Diese Aufgabe wird durch die im Anspruch 1 beschriebene Erfindung gelöst. Vorteilhafte Weiterbildungen der Erfindung sind in den Unteransprüchen beschrieben.

Die erfindungsgemäße Lösung hat mehrere Vorteile. Dadurch, daß das Kopfrad und die die Hubbewegung auslösende Gewindespindel formschlüssig in Eingriff stehen, hat die Schwerkraft keine Einwirkung. Das bedeutet, daß die Kopfradanordnung unabhängig von ihrer jeweiligen Lage arbeitet. Die Lagerreibung und die Haftreibung werden gering gehalten, weil sowohl das Kopfrad als auch die Gewindespindel immmer, d.h. auch bei nicht vorhandener Hubbewegung, in der gleichen Richtung mit hoher Geschwindigkeit rotieren.Die Hubbewegung wird lediglich durch eine Änderung der Geschwindigkeit der Gewindespindel erreicht. Das Kopfrad bewegt sich dann entsprechend der Differenz zwischen der Geschwindigkeit der Kopftrommel und der Geschwindigkeit der Gewindespindel in der einen oder anderen axialen Richtung. Da Kopftrommel und Gewindespindel ständig in der gleichen Richtung rotieren, ist keine Reversion von rotierenden Massen erforderlich.

Die Erfindung wird im folgenden an einem Ausführungsbeispiel anhand der Zeichnung erläutert. Darin zeigen

Fig. 1 eine konstruktive Ausführung der erfindungsgemäßen Kopfradanordnung,

Fig. 2 eine Draufsicht auf die Anordnung nach Fig. 1,

Fig. 3 eine Steuerschaltung für die in Fig. 1 verwendeten Motoren und

Fig. 4 eine Weiterbildung der Erfindung.

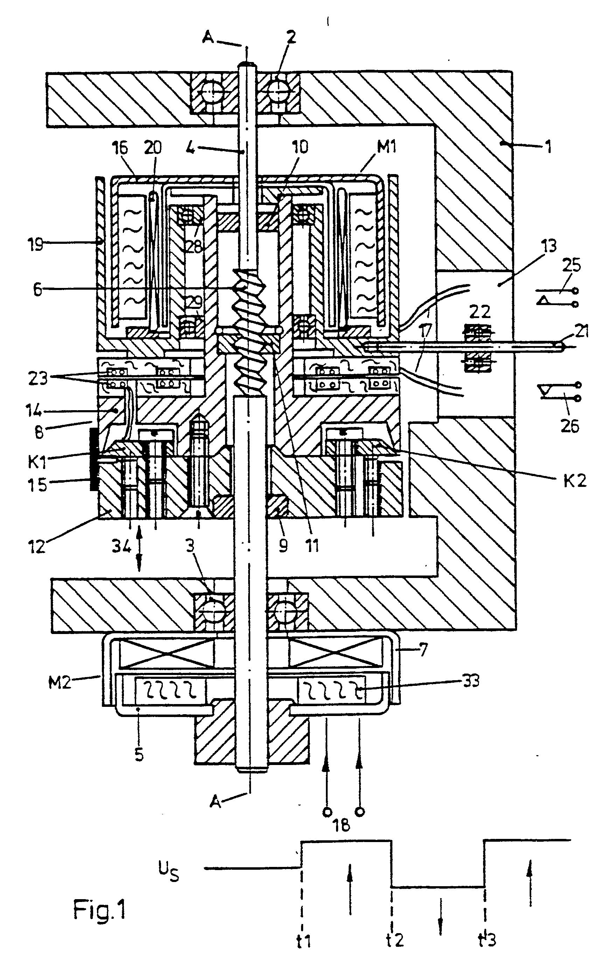

In Fig. 1 ist in dem ortsfesten Rahmen 1 mittels Lager 2,3 die die Gewindespindel 6 tragende Welle 4 drehbar, aber axial unverschiebbar gelagert. Das untere Ende der Welle 4 ist mit dem Rotor 5 des Motors M2 verbunden,dessen Stator 7 fest mit dem Rahmen 1 verbunden ist. Das Kopfrad 8, das die Kopfscheibe 12, die Köpfe K1,K2 und die Trommel 14 enthält, ist über die Gleitlager 9,10 drehbar auf der Welle 4 gelagert. Dabei greift die Gewindespindel 6 in die fest mit der Trommel 14 verbundene Mutter 11 ein. Das Magnetband 15 ist um das Kopfrad 8 herumgeführt, z.B. über einen Winkel von 180°. Die Signale werden von den Köpfen K1,K2 über die rotierenden Übertrager 23 und die flexiblen Leitungen 17 den Aufnahme oder Wiedergabeverstärkern zugeführt. An der Trommel 14 ist außerdem der Rotor 16 des Motors M1 befestigt. Der Stator 19 des Motors M1 ist über die Lager 28,29 auf der Trommel 14 relativ zu dieser drehbar gelagert und enthält die Statorwicklung 20. Der Stator 19 ist über den Stift 21 und das Lager 22 so mit dem Rahmen 1 verbunden,daß der Stift 21 in dem Schlitz 13 des Rahmens 1 in Axialrichtung A-A bewegbar ist, jedoch eine Drehung des Stators 19 verhindert.

Die Teile 9,10,11,12,K1,K2,14,16 bilden den um die Achse A rotierenden Teil der Kopfradanordnung. Die Teile 19,20,21,30 bilden den Teil der Kopfradanordnung, der nicht rotieren kann, aber in Richtung der Achse A verschiebbar ist.

Die Wirkungsweise ist folgende: Der Motor M1 wird mit einer Geschwindigkeit von etwa 6000 Upm angetrieben, so daß das Kopfrad 8 mit dieser Drehzahl um die Achse A rotiert. Die Welle 4 mit der Gewindespindel 6 wird durch den Motor M2 in der gleichen Richtung wie das Kopfrad 8 und mit der gleichen Umdrehungszahl angetrieben. Wegen der gleichen Umdrehungszahlen besteht zwischen der Gewindespindel 6 und der Mutter 11 keine Relativbewegung, so daß das Kopfrad 8 rotiert, in Richtung der Achse A jedoch nicht bewegt wird. In Fig. 1 unten ist dieser Zustand vor t1 angedeutet. Im Zeitpunkt t1 wird die über die Klemmen 18 an die Wicklung 33 angelegte Steuerspannung Us erhöht, so daß der Motor M2 schneller läuft, z.B. mit 6010 Upm. Dadurch dreht sich die Gewindespindel 6 in die Mutter 11 langsam hinein, so daß das Kopfrad 8 in erwünschter Weise eine Hubbewegung 34 nach unten ausführt. Im Zeitpunkt t2 werden die Steuerspannung Us und damit die Drehzahl der Gewindespindel 6 entsprechend verringert, so daß jetzt die Gewindespindel 6 sich aus der Mutter 11 herausdreht und das Kopfrad 8 in Hubrichtung 34 nach oben bewegt wird. Der Amplitudensprung der Spannung Us bei t1,t2,t3 bestimmt also die Geschwindigkeit der Hubbewegung 34 und die Dauer t1 - t2 oder t2 - t3 die Amplitude der Hubbewegung 34.

Jeweils an den Grenzen der maximal zulässigen Hubbewegung wirkt der Stift 21 auf Kontakte 25 oder 26 ein, die den Antrieb durch die Motoren M1,M2 abschalten. Dadurch wird verhindert, daß die Mutter 11 über die Enden der Gewindespindel 6 hinaus bewegt wird.

Für den Motor M1 wird ein eisenloser, elektronisch kommutierter sogenannter Luftspulenmotor verwendet und für den M2 ein elektronisch kommutierter Flachläufer. Es können jedoch auch mechanisch kommutierte Motoren, Ankermotoren und dgl. verwendet werden.

Die Steuerelektronik für die beiden Motoren M1,M2 ist so ausgebildet, daß die beiden Motoren synchron und gleichmäßig hochlaufen und wieder auslaufen. Das ist wichtig, damit nicht durch eine zu große Abweichung der Drehzahlen der beiden Motoren M1,M2 eine unzulässige große Hubbewegung 34 entsteht.

Das Zusammenwirken zwischen der Mutter 11 und der Gewindespindel 6 kann auch durch ein Kugelgewindegetriebe realisiert werden. Bei einem derartigen Getriebe sind über einen Teil eines Gewindeganges Kugeln angeordnet, die etwa nach Durchlauf einer Windung in eine Kammer oder einen Hohlraum der Mutter zurückfallen und dann erneut in einen Gewindegang eingeführt werden. Derartige Kugelgewindegetriebe sind handelsüblich und ermöglichen eine besonders spielfreie, reibungslose und saubere Übertragung der Bewegung.

Der Anordnung gemäß Fig. 1 kann eine Einrichtung zugeordnet sein, die den für das jeweilige Magnetband 15 optimalen Hub hinsichtlich Lage und Amplitude ermittelt und dementsprechend den Hub durch die Steuerspannung Us einstellt. Eine derartige Einrichtung ist beschrieben in der älteren Patentanmeldung P 35 29 008.0. An dem Rahmen 1 kann zusätzlich der sogenannte Capstan angeordnet sein, der den Längstransport des Magnetbandes 15 mit einer geringen Geschwindigkeit von z.B. 20 mm pro Sekunde bewirkt.

Bei dem beschriebenen Ausführungsbeispiel liegen etwa folgende Werte vor:
Umdrehungszahl des Kopfrades 8: 6000 Upm
Durchmesser des Kopfrades 8: 17 mm
Maximale Hubbewegung 34: 4 mm
Breite des Magnetbandes 15: 8 mm

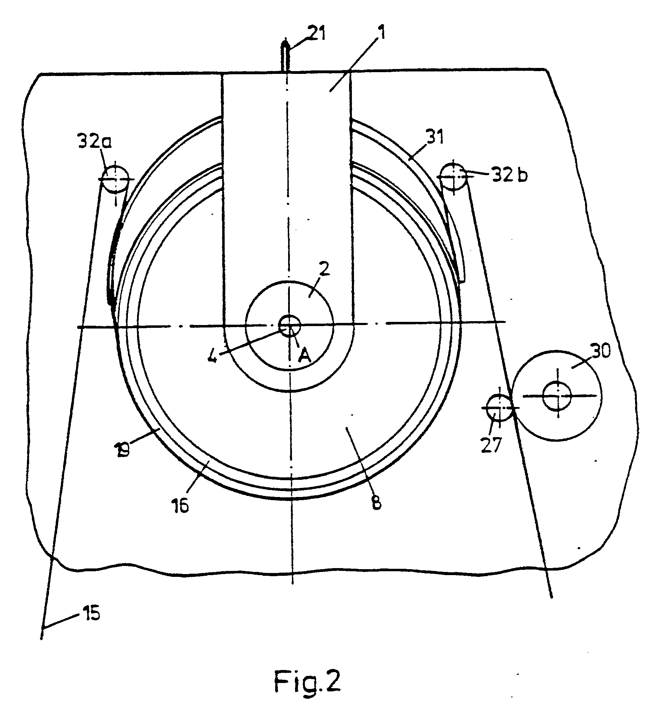

Fig. 2 zeigt eine Draufsicht auf die Anordnung nach Fig. 1.

Das Magnetband 15 ist über die Umlenkstifte 32a und 32b etwa über einen Winkel von 180° um das Kopfrad 8 herumgeführt. Das Band 15 stützt sich dabei auf dem feststehenden Führungsschuh 31 ab, der fest mit dem Rahmen 1 verbunden und in Fig. 1 nicht dargestellt ist. Das Band 15 hat also relativ zum Rahmen 1 immer die gleiche Lage in Hubrichtung 34. Der Längstransport des Bandes 15 erfolgt mit dem Capstan 27 und der Gummiandruckrolle 30, die ebenfalls an dem Rahmen 1 gelagert sind.

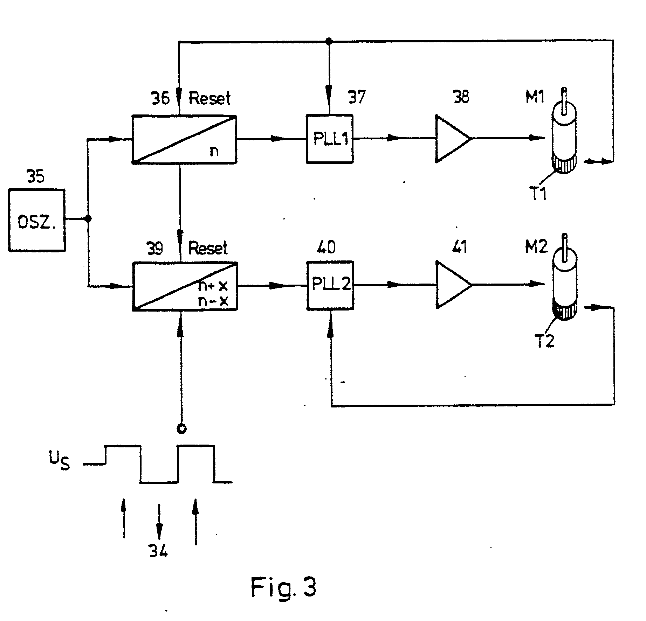

Fig. 3 zeigt eine Schaltung zur Steuerung der beiden Motoren M1,M2. Für die synchrone Steuerung ist ein gemeinsamer Oszillator 35 vorgesehen, der über den Frequenzteiler 36 mit dem Teilerfaktor n, die PLL-Schaltung 37 und die Treiberstufe 38 den mit einem Tachogenerator T1 versehenem Motor M1 und außerdem über den Frequenzteiler 39, die PLL-Schaltung 40 und die Treiberstufe 41 den mit dem Tachogenerator T2 versehenen Motor M2 steuert. Der Motor M1 wird, gesteuert vom Oszillator 35, mit konstanter Drehzahl angetrieben. Die Drehzahl des Motors M2 ist durch eine Änderung des Teilerfaktors n auf n+x und n-x durch die Steuerspannung Us veränderbar, so daß sich die Drehzahl des Motors M2 entsprechend der Steuerspannung Us für die Erzeugung der Hubbewegung 34 ändert.

Als Not- und Stillstandsbremse kann zusätzlich ein auf das Kopfrad 8 und den Rotor 5 des Motors M2 wirkender Hubmagnet eingesetzt werden. Mit einem solchen Hubmagnet, der z.B. mit gummiartigen Bremsbelägen auf den Umfang des Kopfrades 8 und/oder des Rotors 5 einwirkt, kann zu definierten Zeitpunkten, für einen definierten Zeitraum und unter bestimmten Bedingungen eine Bremsung, also Arretierung von Kopfrad 8 und Rotor 5 erreicht werden. Die Bremsung dieser beiden Teile erfolgt z.B. bei einer Änderung der Betriebsart oder beim Transport des gesamten Gerätes. Beispielsweise wirkt ein Hubmagnet im Ruhezustand stets als Bremse auf die genannten Teile und wird nur durch eine Steuereinheit dann gelockert, wenn die Drehung der beiden genannten Teile 8, 5 erfolgen soll. Der Hubmagnet kann auch zusätzlich durch die Schalter 25, 26 ausgelöst werden, um eine Bewegung des Kopfrades 8 über die beiden Endstellungen hinaus zu verhindern.

Bei einer bevorzugten Ausführungsform der Erfindung ist das Kopfrad mit dem Rotor eines Motors verbunden, dessen Stator unverdrehbar, aber axial verschiebbar an einem ortsfesten Rahmen gelagert ist. An dem Rahmen ist die Gewindespindel drehbar, aber axial unverschiebbar gelagert. An dem Rahmen ist ein als Stützelement oder Lineal für das Band dienendes Teil vorgesehen, das das Kopfrad im Bereich des einlaufenden und auslaufenden Bandes schuh- oder bügelförmig umgibt. An dem Rahmen ist der Capstan für den Längstransport des Bandes angeordnet. Die Motoren für die beiden Spindeln sind vorzugsweise elektronisch kommutierte Motoren. Zusätzlich ist eine Einrichtung vorgesehen, die durch Beschreiben und anschließendes Lesen des Bandes den zur Ausnutzung des Bandes optimalen Hubbereich ermittelt und dementsprechend Lage und Amplitude des Hubes steuert. Die Gewindespindel weist am einen und/oder anderen Ende einen Freischnitt auf, in dem das Kopfrad und die Gewindespindel außer Eingriff gelangen. Als Not-und Stillstandsbremse ist ein auf das Kopfrad und den Rotor des Motors für die Gewindespindel wirkender Hubmagnet vorgesehen, der mit gummiartigen Bremsbelägen auf den Umfang des Kopfrades und/oder des Rotors einwirkt.

Die in Fig. 1 symbolisch angedeutete Lagerung mit dem Kugellager 22 ist konstruktiv folgendermaßen ausgeführt: Der Stift 21 ist in dem Innenring des Kugellagers 22 gelagert. Der Außenring des Kugellagers 22 ruht mit Spiel in dem Schlitz 13, dessen Breite quer zur Hubbewegung 34 etwas größer ist als der Außendurchmesser des Kugellagers 22. Dadurch kann bei der Hubbewegung 34 des Stiftes 21 in dem Schlitz 13 der Innenring des Kugellagers 22 gegenüber dem Außenring abrollen und so eine reibungsarme Führung in Richtung der Hubbewegung 34 ermöglichen.

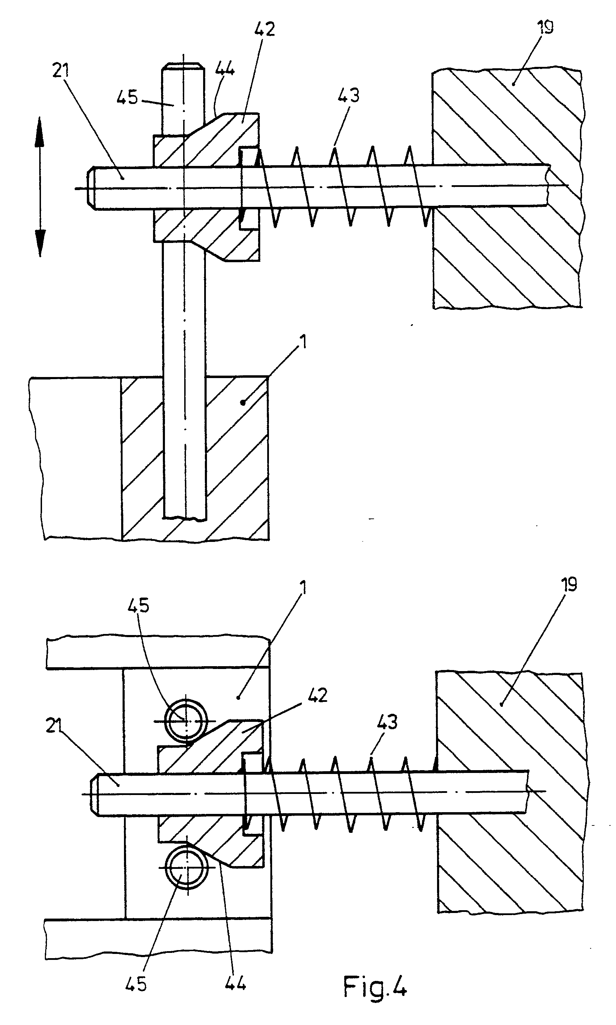

Fig. 4 zeigt eine andere Ausführung der Führung des Stiftes 21. Auf dem Stift 21, der wie in Fig. 1 fest in dem Stator 19 gelagert ist, ist das Führungsteil 42 spielfrei, aber axial verschiebbar gelagert. Durch die Feder 43 wird das rotatonssymmetrische Führungsteil 42 mit seiner konisch ausgebildeten Oberfläche 44 gegen zwei Stangen 45 gedrück, die in Richtung der Hubbewegung 34 parallel zueinander fest an dem Rahmen 1 gelagert sind. Dadurch ergibt sich eine spielfreie Lagerung des Stiftes 21 an dem Rahmen 1 derart, daß der Stift 21 eine Rotation des Stators 19 verhindert, jedoch eine Bewegung des Stators 19 in Richtung der Hubbewegung 34 mit geringer Reibung ermöglicht. Die Stangen 45 bestehen vorzugsweise aus Metall und das Führungsteil 42 aus einem abriebbeständigen Kunststoff wie z.B. Teflon. Die Stangen 45 und das Führungsteil 42 können je für sich aus Metall oder aus Kunststoff bestehen. Das Material ist so gewählt, daß sich zwischen den Teilen 44, 45 eine abriebfeste und reibungsarme Berührung ergibt. Die Stangen 45 erstecken sich innerhalb des Schlitzes 13 in Richtung der Hubbewegung 34. Sie liegen also in Fig. 1 im Schlitz 13 senkrecht hintereinander.

## Patentansprüche

1. Kopfradanordnung für einen Recorder mit einem um eine Achse (A) rotierenden, von einem Motor (M$_1$) angetriebenen und von einem Magnetband (15) umschlungenden Kopfrad (8), das durch eine Hubbewegung (34) in Richtung der Achse (A) verstellbar ist, wobei das rotierende Kopfrad (8) auf einer in gleicher Richtung rotierenden und von einem zweiten Motor (M$_2$) angetriebenen Gewindespindel (6) gelagert ist, deren Rotationsgeschwindigkeit bezüglich der Rotationsgeschwindigeit des Kopfrades zur Erzeugung der Hubbewegung (34) durch eine Steuerspannung (Us) veränderbar ist.

2. Anordnung nach Anspruch 1, wobei die beiden Motoren (M1, M2) von einem gemeinsamen Oszillator (35) gesteuert sind.

3. Anordnung nach Anspruch 2, wobei die Motoren (M1, M2) je vom Ausgang einer Phasenverriegelungsschaltung (37, 40) gesteuert sind, an deren Eingänge die Ausgänge des Oszillators (35) und eines Tachogenerators (T1, T2) des Motors (M1, M2) angeschlossen sind.

4. Anordnung nach Anspruch 3, wobei zwischen dem Ausgang des Oszillators (35) und den Phasenverriegelungsschaltungen (37, 40) Frequenzteiler (36, 39) aufgenommen sind.

5. Anordnung nach Anspruch 4, wobei der Teilerfaktor (n) für den Frequenzteiler (39) im Steuerweg des Motors (M2) für die Gewindespindel (6) durch die Steuerspannung (Us) einstellbar ist.

6. Anordnung nach Anspruch 1, wobei die beiden Motoren (M1, M2) beim Anlauf und Auslauf so gesteuert sind, daß ihre Drehzahl sich synchron und in gleicher Weise ändern.

7. Anordnung nach Anspruch 1, wobei das Kopfrad (8) mittels eines Kugelgewindegetriebes auf der Gewindespindel (6) gelagert ist.

8. Anordnung nach Anspruch 1, wobei Endkontakte (25, 26) vorgesehen sind, die bei der maximal zulässigen Hubbewegung (34) durch ein Teil (21) des Kopfrades (8) betätigt werden und die Antriebe (M1, M2) für das Kopfrad (8) und die Gewindespindel (6) abschalten.

9. Anordnung nach Anspruch 1, wobei ein nicht rotierendes, entsprechend der Hubbewegung (34) verstellbares Teil (19) der Kopfradanordnung mit einem radial gerichteten Stift (21) versehen ist, auf dem ein Führungsteil (42) verschiebbar gelagert ist, das durch eine Feder (43) gegen zwei stationäre, in Richtung der Hubbewegung (34) parallel zueinander am Rahmen (1) verlaufende Stangen (45) gedrückt wird.

## Claims

1. A head wheel arrangement for a recorder with a head wheel (8) which rotates about an axis (A), is driven by a motor (M) and is encircled by a magnetic tape (15) and is adjustable by a stroke motion (34) in the direction of the axis (1), wherein the rotating head wheel (8) is mounted on a threaded spindle (6) which rotates in the same direction and is driven by a second motor (M2), the rotational speed of the said spindle with respect to the rotational speed of the head wheel being variable by a control voltage (Us) in order to produce the stroke motion (34).

2. An arrangement according to claim 1, wherein the two motors (MI, M2) are controlled by a common oscillator (35).

3. An arrangement according to claim 2, wherein the motors (MI, M2) are each controlled by the output of a phase-locking circuit (37, 40), to the inputs of which are connected the outputs of the oscillator (35) and of a tachogenerator (T1, T2) of the motor (M1, M2).

4. An arrangement according to claim 3, wherein frequency dividers (36, 39) are incorporated between the output of the oscillator (35) and the phase-locking circuits (37, 40).

5. An arrangement according to claim 4, wherein the division ratio (n) for the frequency divider (39) in the control path of the motor (M2) for the threaded spindle (6) is adjustable by the control voltage (Us).

6. An arrangement according to claim 1, wherein the two motors (MI, M2) are so controlled during start-up and run-down that their rotational speeds vary synchronously and in the same sense.

7. An arrangement according to claim 1, wherein the head wheel (8) is mounted on the threaded spindle (6) with the aid of a threaded ball gear.

8. An arrangement according to claim 1, wherein end contacts (25, 26) are provided which are actuated during the maximum permitted stroke motion (34) by a part (21) of the head wheel (8) and switch off the drives (MI, M2) for the head wheel (8) and the threaded spindle (6).

9. An arrangement according to claim 1 wherein a non-rotating part (19) of the head wheel arrangement, which is adjustable in accordance with the stroke motion (34), is provided with a radially directed pin (21) on which a guide member (42) is displaceably mounted, said guide member being forced by a spring (43) against two stationary rods (45) running parallel to each other on the support (1) in the direction of the stroke motion (34).

## Revendications

1. Dispositif de roue de tête Pour un enregistreur avec une roue de tête (8) rotative autour d'un axe (A), commandée par un moteur (M1) et entourée par une bande magnétique (15), roue de tête qui peut être déplacée dans le sens de l'axe (A) par un mouvement de levée (34), la roue de tête rotative (8) étant positionnée sur une broche filetée (6) rotative dans le même sens et commandé par un second moteur (M2), broche dont la vitesse de rotation par rapport à la vitesse de rotation de la roue de tête peut être variée par une tension de commande (Us) pour générer le mouvement de levée (34).

2. Dispositif selon la revendication 1, les deux moteurs (M1, M2) étant commandés par un oscillateur commun (35).

3. Dispositif selon la revendication 2, les moteurs (M1, M2) étant commandés chacun par la sortie d'un circuit de blocage de phase (37, 40) aux entrées duquel les sorties de l'oscillateur (35) et d'un générateur tachymétrique (T1, T2) du moteur (M1, M2) sont branchées.

**4.** Dispositif selon la revendication 3, des séparateurs de fréquence (36, 39) étant logés entre la sortie de l'oscillateur (35) et les circuits de blocage de phase (37, 40).

**5.** Dispositif selon la revendication 4, le facteur de séparation (n) du diviseur de fréqunece (39) dans le parcours de commande du moteur (M2) pour la broche filetée (6) étant réglable par la tension de commande (Us).

**6.** Dispositif selon la revendication 1, les deux moteurs (M1, M2) étant commandés lors de leur montée en vitesse et de leur ralentissement de telle manière que leurs vitesses se modifient de manière synchrone et de la même manière.

**7.** Dispositif selon la revendication 1, la roue de tête (8) étant positionnée au moyen d'un engrenage fileté à billes sur la broche filetée (6).

**8.** Dispositif selon la revendication 1, des contacts terminaux étant prévus, contacts qui sont actionnés, pour le mouvement de levée maximum admissible (34), par une pièce (21) de la roue de tête (8) et qui mettent hors circuit les commandes (M1, M2) de la roue de tête (8) et de la broche filetée (6).

**9.** Dispositif selon la revendication 1, une pièce (19) du dispositif de roue de tête non rotative, déplaçable selon le mouvement de levée (34) étant équipée d'une cheville (21) orientée radialement, cheville sur laquelle une pièce de guidage (42) étant positionnée en étant déplaçable, pièce qui est appuyée par un ressort (43) contre deux tiges (43) stationnaires, parallèles l'une à l'autre sur le bâti (1) dans le sens du mouvement de levée.

Fig.1

Fig.2

Fig. 3

Fig.4